# EUROPÄISCHE PATENTANMELDUNG

(11) **EP 4 335 817 A1**
(43) Veröffentlichungstag der Anmeldung: **13.03.2024**
(21) Anmeldenummer: 22194813.6
(22) Anmeldetag: 09.09.2022
(51) Int. Cl.: C01B 17/50, C01B 17/74

(54) **VERFAHREN UND VORRICHTUNG ZUR HERSTELLUNG VON SCHWEFELTRIOXID UND OPTIONAL SCHWEFELSÄURE**

(71) Anmelder: Goritschnig, Peter, 8301 Lassnitzhöhe (AT)
(72) Erfinder: Goritschnig, Peter, 8301 Lassnitzhöhe (AT)
(74) Vertreter: Wirnsberger & Lerchbaum Patentanwälte OG

(57) **Zusammenfassung**

Die Erfindung betrifft ein Verfahren zur Herstellung von Schwefeltrioxid und optional Schwefelsäure, insbesondere Schwefelsäure in Elektronikqualität, wobei Sauerstoff (O₂) über mehrere Einlässe (7) in ein im Wesentlichen aus flüssigem Schwefel (S) bestehendes Schwefelbad (5) eingeleitet und mit dem Schwefel (S) zur Reaktion gebracht wird, wobei ein Schwefeldioxid umfassendes Prozessgas erzeugt wird, wonach das im Prozessgas enthaltene Schwefeldioxid katalytisch zu Schwefeltrioxid oxidiert wird. Hierbei ist erfindungsgemäß vorgesehen, dass das Prozessgas in einem Bereich hohen Drucks und unter Temperierung des Schwefelbades (5), wobei eine Wärmeübertragung mit einem innerhalb des Schwefelbades (5) geführten Wärmeträger (27) erfolgt, mit einer für die nachfolgende katalytische Oxidation ausgelegten Temperatur erzeugt wird, wonach das Prozessgas im Bereich hohen Drucks katalytisch oxidiert wird, ehe ein Schwefeltrioxid umfassendes oxidiertes Prozessgas in einen Bereich niedrigen Drucks überführt wird.

Weiter betrifft die Erfindung eine Vorrichtung (1) zur Herstellung von Schwefeltrioxid und optional Schwefelsäure.

Darüber hinaus betrifft die Erfindung eine Verwendung einer derartigen Vorrichtung (1).

## Beschreibung

Die Erfindung betrifft ein Verfahren zur Herstellung von Schwefeltrioxid und optional Schwefelsäure, insbesondere Schwefelsäure in Elektronikqualität, wobei Sauerstoff über mehrere Einlässe in ein im Wesentlichen aus flüssigem Schwefel bestehendes Schwefelbad eingeleitet und mit dem Schwefel zur Reaktion gebracht wird, wobei ein Schwefeldioxid umfassendes Prozessgas erzeugt wird, wonach das im Prozessgas enthaltene Schwefeldioxid katalytisch zu Schwefeltrioxid oxidiert wird.

Weiter betrifft die Erfindung eine Vorrichtung zur Herstellung von Schwefeltrioxid und optional Schwefelsäure, insbesondere Schwefelsäure in Elektronikqualität, umfassend einen Generator mit einer Schwefelzufuhr und einer Sauerstoffzufuhr mit mehreren Einlässen, in welchem Generator Sauerstoff zum Erzeugen eines Prozessgases über die Einlässe in ein im Wesentlichen aus flüssigem Schwefel bestehendes Schwefelbad einleitbar ist, und einen Reaktor mit einer Reaktionszone zur Oxidation von Schwefeldioxid zu Schwefeltrioxid, wobei in der Reaktionszone ein Katalysator für die Oxidation angeordnet ist, und wobei Generator und Reaktor integral ausgebildet oder über eine erste Leitung miteinander verbunden sind.

Darüber hinaus betrifft die Erfindung eine Verwendung einer derartigen Vorrichtung.

Aus dem Stand der Technik sind Verfahren zur Herstellung von Schwefeltrioxid bekannt, bei welchen in der Regel Ausgangsmaterialien wie elementarer Schwefel, sowohl in festem als auch flüssigem Aggregatzustand, schwefelhaltige Erze oder Abfallschwefelsäure zur Anwendung kommen. Beim Einsatz von flüssigem Schwefel wird dieser zumeist in einem sogenannten Generator mit Umgebungsluft zur Reaktion gebracht, um ein Schwefeldioxid enthaltendes Prozessgas zu erhalten. Da die Reaktion des Schwefels mit dem in der Umgebungsluft enthaltenen Sauerstoff exotherm abläuft, kann eine Temperatur im Generator auf über 1000 °C steigen.

Eine Apparatur zum Durchführen eines solchen Verfahrens weist zumeist einen besonders hohen Platzbedarf auf, weil Umgebungsluft für gewöhnlich große Anteile an Stickstoff enthält. Zudem reagiert Stickstoff bei derart hohen Temperaturen zu Stickoxiden, weshalb eine besondere Aufreinigung des Abgases notwendig ist, um eine Umweltbelastung zu reduzieren. Abhilfe wird herkömmlicherweise durch den Einsatz von technischem Sauerstoff, reinem Sauerstoff oder mit Sauerstoff angereicherter Umgebungsluft geschaffen. Der höhere Sauerstoffanteil führt jedoch zu noch größeren Mengen an freigesetzter Energie. Um diese besser abführen zu können, kann gemäß dem Stand der Technik eine Einteilung des Generators in Reaktionsbereiche vorgesehen sein. Dabei werden sowohl flüssiger Schwefel als auch Sauerstoff über Düsen in die Reaktionsbereiche eingebracht, um die Reaktion leichter kontrollieren zu können. Die freigesetzte Energie wird in der Regel durch in oder zwischen den Reaktionsbereichen angebrachte Wärmetauscher abgeführt.

Alternativ sind aus dem Stand der Technik auch Verfahren bekannt, bei welchen Sauerstoff in ein Bad aus flüssigem Schwefel eingebracht wird. Um hierbei eine ausreichende Reaktion zwischen Schwefel und Sauerstoff erzielen zu können, wird der Sauerstoff zumeist über mehrere Einlässe in das Schwefelbad eingebracht. Zum einen führt selbst ein Einbringen des Sauerstoffes über mehrere Einlässe zumeist nur zu einer unvollständigen Reaktion zwischen Sauerstoff und Schwefel und zum anderen verdampft der flüssige Schwefel zumindest teilweise während der Reaktion, weshalb oftmals ein zweiter Reaktionsbereich mit Sauerstoffzufuhr genutzt wird, um eine vollständige Umsetzung des Schwefels zu Schwefeldioxid zu erzielen.

Darüber hinaus sieht der Stand der Technik im Anschluss an die Schwefeldioxiderzeugung eine katalytische Oxidation zu Schwefeltrioxid vor, wofür ein Reaktor zum Einsatz kommen kann. Um eine Überhitzung eines im Reaktor befindlichen Katalysators zu verhindern und damit dessen Funktionstüchtigkeit sicherzustellen, wird das Schwefeldioxid enthaltende Prozessgas vor einem Kontakt mit dem Katalysatormaterial gekühlt. Dabei kann ein Kühlen innerhalb des Generators, zwischen Generator und Reaktor oder auch erst im Reaktor erfolgen.

Entsprechend ergeben sich aus dem Stand der Technik die Nachteile, dass der Generator eine komplexe Bauweise aufweisen muss, um eine effiziente Umsetzung von Schwefel und Sauerstoff zu Schwefeldioxid erzielen zu können, und das Prozessgas vor der katalytischen Oxidation gekühlt werden muss.

Aufgabe der Erfindung ist es daher, ein Verfahren der eingangs genannten Art bereitzustellen, bei welchem die Nachteile des Standes der Technik vermieden oder zumindest verringert sind.

Eine weitere Aufgabe der Erfindung liegt darin, eine Vorrichtung der eingangs genannten Art anzugeben, mit welcher die Nachteile des Standes der Technik zumindest teilweise vermieden und welche mit geringerem Platzbedarf ausgebildet werden kann.

Darüber hinaus ist es Aufgabe der Erfindung, eine Verwendung einer derartigen Vorrichtung anzugeben.

Die verfahrensmäßige Aufgabe wird dadurch gelöst, dass bei einem Verfahren der eingangs genannten Art das Prozessgas in einem Bereich hohen Drucks und unter Temperierung des Schwefelbades, wobei eine Wärmeübertragung mit einem innerhalb des Schwefelbades geführten Wärmeträger erfolgt, mit einer für die nachfolgende katalytische Oxidation ausgelegten Temperatur erzeugt wird, wonach das Prozessgas im Bereich hohen Drucks katalytisch oxidiert wird, ehe ein Schwefeltrioxid umfassendes oxidiertes Prozessgas in einen Bereich niedrigen Drucks überführt wird.

Ein mit einem erfindungsgemäßen Verfahren erzielter Vorteil ist insbesondere darin zu sehen, dass das Prozessgas in einem Bereich hohen Drucks durch ein Temperieren, vorzugsweise Kühlen, des Schwefelbades so erzeugt werden kann, dass nachfolgend ohne weitere Maßnahmen eine katalytische Oxidation erfolgen kann. Zum einen ist dies darauf zurückzuführen, dass eine Siedetemperatur des Schwefels durch den hohen Druck im Vergleich zur Siedetemperatur bei Normaldruck zu höheren Temperaturen verschoben wird. Entsprechend kann das Prozessgas unterhalb des Siedepunktes des Schwefels erzeugt und somit eine Entstehung von Schwefeldampf weitestgehend vermieden werden. Bei herkömmlichen Verfahren zur Herstellung von Schwefeltrioxid erweisen sich bereits geringe Anteile von Schwefeldampf im Prozessgas als äußerst problematisch, da der Schwefeldampf in Leitungen sublimieren und diese verstopfen oder die Effizienz des Katalysators beeinträchtigen kann. Zum anderen kommt auch dem innerhalb des Schwefelbades geführten Wärmeträger eine entscheidende Rolle zu. Durch den Wärmeträger kann das Schwefelbad auf gleichermaßen einfache, kostengünstige und gut kontrollierbare Weise temperiert und auf ein weiteres Kühlen des Prozessgases verzichtet werden. Demnach erfolgt trotz des hohen Drucks keine Überhitzung des Schwefelbades und/oder des Prozessgases. Dabei wird der Wärmeträger zumeist in einem, innerhalb des Schwefelbades positionierten, Wärmetauscher mit besonders großer Oberfläche geführt, um das Schwefelbad auf effiziente Weise temperieren und eine während der Reaktion freigesetzte Energie auf effiziente Weise abführen zu können. Zudem kann der Wärmeträger auch zum Aufheizen des Schwefelbades genutzt werden, ehe ein Einleiten des Sauerstoffes in das Schwefelbad erfolgt.

Um eine Entstehung von Nebenprodukten zu vermeiden, wird der flüssige Schwefel mit, vorzugsweise besonders reinem, Sauerstoff zur Reaktion gebracht. Umgebungsluft und/oder mit Sauerstoff angereicherte Umgebungsluft weisen für gewöhnlich signifikante Anteile an Inertgasen, insbesondere Stickstoff, auf, welche im Verfahren nicht umgesetzt werden und lediglich einen passiven Teil des Prozessgases darstellen. Da Umgebungsluft zumeist ca. 21 Volumenprozent (im Folgenden kurz: Vol.-%) Sauerstoff und ca. 78 Vol.-% Stickstoff enthält, übersteigt der passive Teil eines damit erhaltenen Prozessgases jenen des Schwefeldioxids um ein Vielfaches. Beim Einsatz von technischem Sauerstoff mit zumindest 99 Vol.-% Sauerstoff oder reinem Sauerstoff mit zumindest 99,9 Vol.-% Sauerstoff kann der passive Teil des Prozessgases entsprechend verringert werden, sodass ein damit erzeugtes Prozessgas nur ein vergleichsweise geringes Volumen aufweist. Vorzugsweise kommt Sauerstoff zur Anwendung, welcher vorab bei einer Elektrolyse von Wasser erzeugt wird. Da bei der Elektrolyse von Wasser in der Regel Wasserstoff das Hauptprodukt darstellt, fällt gleichzeitig erzeugter Sauerstoff zumeist bloß als unerwünschtes Nebenprodukt an. Dieser Sauerstoff, welcher für gewöhnlich in die Umgebung entlassen wird, weist jedoch eine besonders hohe Reinheit von über 99 Vol.-% auf und eignet sich damit bestens für das erfindungsgemäße Verfahren. Einerseits bietet die Verwendung von derart reinem Sauerstoff den Vorteil, dass aufgrund lediglich geringer Mengen an Inertgasen im Sauerstoff das Prozessgas ein vergleichsweise geringes Volumen und damit eine vergleichsweise geringe Flussgeschwindigkeit aufweisen kann. Andererseits kann eine Vorrichtung zum Durchführen eines solchen Verfahrens dadurch auch bei beengten Platzverhältnissen, welche für eine herkömmliche Anlage zur Herstellung von Schwefeltrioxid nicht ausreichend sind, aufgebaut und betrieben werden. Wird Sauerstoff mit vergleichsweise hohen Anteilen an Inertgasen, beispielsweise Umgebungsluft, verwendet, ist dies nicht möglich.

Weiter kann eine Verunreinigung des Prozessgases verhindert oder zumindest reduziert werden, wenn flüssiger Schwefel von besonders hoher Reinheit eingesetzt wird. Dabei kann der flüssige Schwefel filtriert werden und/oder ein Schwefelablass vorgesehen sein, über welchen verunreinigter Schwefel aus dem Schwefelbad entfernbar ist. Zudem kann das Schwefelbad über den Schwefelablass auch kontinuierlich oder in Intervallen, insbesondere während des Verfahrens, regeneriert werden. Da sich Verunreinigungen in der Regel in einem unteren Bereich des Schwefelbades sammeln, ist der Schwefelablass zweckmäßigerweise in diesem Bereich des Schwefelbades angeordnet.

Um eine besonders effiziente Reaktion des Sauerstoffes mit dem Schwefelbad zu erzielen, wird dieser über mehrere Einlässe, vorzugsweise von unten, in das Schwefelbad eingeleitet. Während bei einem einzelnen Einlass die Gefahr besteht, nur eine einzelne große Sauerstoffblase in das Schwefelbad einzubringen, welche nur sehr langsam oder nur teilweise mit dem Schwefel reagiert, entstehen beim Einbringen des gleichen Volumens über mehrere Einlässe kleinere Sauerstoffblasen. Hierdurch wird eine Grenzfläche, an welcher die Reaktion zwischen Sauerstoff und Schwefel abläuft, vergrößert und ein besonders hoher Umsatz erzielt. Bei dieser exotherm ablaufenden Reaktion entsteht nicht nur das Prozessgas, sondern es wird auch Energie freigesetzt. Diese wird vorzugsweise direkt vom Wärmeträger abgeführt, sodass die Temperatur des Schwefelbades während der Reaktion im Wesentlichen konstant gehalten werden kann. Hierbei wird der Wärmeträger vorzugsweise im Gleichstromprinzip geführt, sodass nahe eines Eintrittsbereiches des Sauerstoffes besonders effizient Wärme abgeführt werden kann. Entsprechend findet die Reaktion von Schwefel und Sauerstoff zu Schwefeldioxid weitestgehend isotherm statt. Folglich wird auch das Schwefeldioxid umfassende Prozessgas, welches vorzugsweise aus Schwefeldioxid und Sauerstoff besteht, mit konstanter Temperatur erzeugt. Dabei kann die Temperatur des Prozessgases von der Temperatur des Schwefelbades abweichen, vorzugsweise sind die Temperaturen des Prozessgases und des Schwefelbades aber ungefähr gleich.

Im nächsten Verfahrensschritt wird das Prozessgas einer katalytischen Oxidation unterworfen, wobei das im Prozessgas enthaltene Schwefeldioxid zu Schwefeltrioxid oxidiert wird. Hierzu wird das Prozessgas über einen Katalysator, beispielsweise ein Katalysatorbett, geleitet und an diesem oxidiert. Der zur Oxidation erforderliche Sauerstoff kann dabei entweder direkt zugesetzt werden oder bereits im vorhergehenden Verfahrensschritt dem Prozessgas beigemengt worden sein. In letzterem Fall erfolgt eine Beimengung des Sauerstoffes, vorzugsweise unmittelbar, nach der Entstehung des Prozessgases. Dabei weist der beigemengte Sauerstoff eine ähnliche Temperatur, insbesondere etwa die gleiche Temperatur, wie das Prozessgas auf. Die Oxidation von Schwefeldioxid zu Schwefeltrioxid erfolgt für gewöhnlich in einer Reaktionszone, in welcher der Katalysator angeordnet ist. Dieser beschleunigt die Oxidation und besteht zumeist aus katalytisch aktiven Übergangsmetallpartikeln und/oder Übergangsmetallverbindungen, insbesondere Edelmetallpartikeln, welche auf einer Oberfläche eines Trägers, insbesondere aus Silikat oder oxidischer Keramik, angebracht sind. Als Übergangsmetallpartikel kommen bevorzugt Platinpartikel und als Träger Silikat zur Anwendung, wobei auch andere Zusammensetzungen des Katalysators die gleiche Wirkung erzielen können. Vorzugsweise können mit dem eingesetzten Katalysator auch im Prozessgas enthaltene Schwefeldämpfe, insbesondere zu Schwefeltrioxid, oxidiert werden. An der Oberfläche des Trägers tritt das Prozessgas mit der katalytisch aktiven Komponente in Kontakt, woraufhin die Oxidation von Schwefeldioxid zu Schwefeltrioxid unter Freisetzung von Energie erfolgt.

Da die katalytische Oxidation im Bereich hohen Drucks durchgeführt wird, ist ein Reaktionsgleichgewicht der Oxidation zur Seite des Schwefeltrioxids, also des Produktes, hin verschoben. Dementsprechend wird eine erzielte Umsetzung durch den angelegten Druck in positiver Weise beeinflusst.

Darüber hinaus hängt die erzielte Umsetzung vom Sauerstoffgehalt in der Reaktionszone und von einer Anzahl sowie Gestaltung der Reaktionszonen ab. In der Regel wird bei der Oxidation in einer einzelnen Reaktionszone der Sauerstoffgehalt so gewählt, dass eine Umsetzung von zumindest 90 %, bevorzugt von 95 % bis 100 %, besonders bevorzugt von 99 % bis 100 %, erreicht werden kann. Vorzugsweise ist der Sauerstoffgehalt so gewählt, dass eine stöchiometrische Umsetzung, entsprechend 100 % oder einem Lambda-Wert von 1, des im Prozessgas enthaltenen Schwefeldioxids ermöglicht wird. Alternativ kann Sauerstoff auch im Überschuss, entsprechend einem Lambda-Wert größer als 1, eingesetzt werden, um die vollständige Umsetzung des Schwefeldioxids zu ermöglichen. In beiden Fällen kann bei der Sauerstoffgehalt so gewählt werden, dass auch die Oxidation der im Prozessgas enthaltenen Schwefeldämpfe berücksichtigt ist.

Es hat sich bewährt, dass im Bereich hohen Drucks ein Druck von 2 bar bis 25 bar, bevorzugt 4 bar bis 20 bar, und/oder im Bereich niedrigen Drucks ein Druck kleiner 2 bar, bevorzugt Umgebungsdruck, angelegt wird. Dadurch ist im Bereich hohen Drucks die Siedetemperatur des Schwefels bei der Erzeugung des Prozessgases zu besonders hohen Temperaturen, insbesondere Temperaturen über 500 °C, verschoben. Dementsprechend kann das Prozessgas unterhalb der Siedetemperatur des Schwefels erzeugt werden und daher besonders geringe Anteile an Schwefeldämpfen aufweisen. Folglich kann im Bereich hohen Drucks die katalytische Oxidation des im Prozessgas enthaltenen Schwefeldioxids und gegebenenfalls der Schwefeldämpfe zu Schwefeltrioxid besonders effizient ablaufen. Wird mindestens der zur stöchiometrischen Umsetzung erforderliche Sauerstoffgehalt eingesetzt, kann eine Umsetzung von zumindest 95 %, insbesondere 99 % bis 100 %, erzielt werden. Das Schwefeltrioxid des oxidierten Prozessgases wird im Bereich niedrigen Drucks in Schwefelsäure absorbiert. Dadurch kann auf eine aufwendige, insbesondere druckbeständige, Konstruktion eines hierzu geeigneten Absorbers verzichtet werden. Eine Absorption bei Umgebungsdruck bietet zudem den Vorteil, dass ein nur bedingt druckbeständiger Absorber zum Einsatz kommen kann.

Mit Vorteil ist vorgesehen, dass der Sauerstoff entlang eines Führungsmittels durch das Schwefelbad geleitet und dadurch vorgeheizt wird. Hierdurch kann die Temperatur des Sauerstoffes an jene des Schwefelbades angeglichen werden. Üblicherweise wird der Sauerstoff an einem Eintritt des Führungsmittels in einen Generator, welcher bevorzugt über dem Schwefelbad positioniert ist, in dieses eingeleitet. Zusätzlich kann auch ein zweites Führungsmittel vorgesehen sein, welches mit dem Führungsmittel verbunden ist oder in welches über einen gesonderten Zugang Sauerstoff eingeleitet wird. Das bevorzugt als Rohrleitung ausgebildete Führungsmittel verläuft zumindest teilweise innerhalb des Schwefelbades. Außerdem weist das Führungsmittel vorzugsweise einen runden Querschnitt auf, um eine besonders gleichmäßige Wärmeübertragung auf den Sauerstoff zu ermöglichen.

Mit Vorteil ist das Führungsmittel so ausgebildet, dass dieses in das Schwefelbadeintritt, um die Wärmeübertragung zwischen Schwefelbad und Sauerstoff zu ermöglichen. Zur effizienteren Wärmeübertragung zwischen Schwefelbad und Sauerstoff kann das Führungsmittel vorzugsweise einen oder mehrere gebogene Bereiche aufweisen.

Hierdurch wird die Oberfläche zwischen Führungsmittel und Schwefelbad vergrößert und der Sauerstoff besonders schnell auf Temperatur gebracht. Alternativ kann der Sauerstoff auch vor dem Einleiten in das Führungsmittel auf Temperatur gebracht und das Führungsmittel ohne gebogene Bereiche ausgebildet sein. In diesem Fall kann eine Heizeinrichtung vorgesehen sein, um den Sauerstoff zu erwärmen.

An einem unteren Ende des Führungsmittels, bevorzugt in einem unteren Bereich des Schwefelbades, können mehrere Einlässe zum Einleiten des Sauerstoffes in das Schwefelbad vorgesehen sein. Zweckmäßigerweise wird der Sauerstoff mit ungefähr der gleichen Temperatur in das Schwefelbad eingeleitet, die das Schwefelbad selbst aufweist, wodurch die Reaktion zwischen Schwefel und Sauerstoff besonders effizient ablaufen und ein hoher Umsatz erzielt werden kann.

Das zweite Führungsmittel kann außerhalb des Generators angeordnet sein, um dem Prozessgas nach Verlassen des Generators Sauerstoff zuführen zu können. Dabei kann der Sauerstoff eine Einlasstemperatur aufweisen oder vorgewärmt werden. Alternativ verläuft das zweite Führungsmittel innerhalb des Schwefelbades, weist aber an einem oberen Ende einen oder mehrere Einlässe auf. Hierdurch kann dem Prozessgas bereits im Generator, insbesondere eine definierte Menge, vorgeheizter Sauerstoff zugesetzt werden.

Vorzugsweise wird das Prozessgas mit Temperaturen zwischen 350 °C und 550 °C, insbesondere zwischen 400 °C und 480 °C, erzeugt. Hierdurch kann auf ein Kühlen des Prozessgases nach der Erzeugung verzichtet werden. Werden gängige Übergangsmetallkatalysatoren zur Oxidation von Schwefeldioxid zu Schwefeltrioxid genutzt, sollte die Temperatur in der Reaktionszone einen Grenzwert von 600 °C nicht überschreiten. Um dies zu erreichen, wurden Prozessgase bislang nach deren Erzeugung mit Wärmetauschern auf Temperaturen unter 600 °C gekühlt. Beim vorliegenden Verfahren kann jedoch auf eine nachträgliche Kühlung des Prozessgases verzichtet werden, da dieses bereits bei der Erzeugung eine Temperatur innerhalb des oben angegebenen Bereiches aufweist und deshalb direkt zur Reaktionszone geleitet werden kann.

Zudem entstehen bei der Erzeugung des Prozessgases im angegebenen Temperaturbereich besonders wenige bis keine Nebenprodukte. Entsprechend erfolgt lediglich eine Umsetzung von Schwefel und Sauerstoff zu Schwefeldioxid. Vorzugsweise sind hierzu weder weitere Reaktionsbereiche notwendig noch muss zusätzlicher Sauerstoff eingeleitet werden.

Es hat sich bewährt, dass das Prozessgas während der katalytischen Oxidation durch Wärmeübertragung auf den Wärmeträger gekühlt wird. Dadurch kann die Temperatur in der Reaktionszone reguliert und bei der katalytischen Oxidation freigesetzte Energie abgeführt werden. Hierzu kann der Wärmeträger in einem Wärmetauscher, welcher innerhalb der Reaktionszone angeordnet ist, geführt werden und sowohl Wärme aus dem Prozessgas als auch bei der katalytischen Oxidation freigesetzte Energie, in Form von Wärme, aufnehmen. Vorzugsweise läuft der Wärmeträger dabei in einer der Flussrichtung des Prozessgases entgegengesetzten Richtung durch den Wärmetauscher, sodass eine Wärmeübertragung nach dem Gegenstromprinzip erzielt wird. Das Gegenstromprinzip bietet den Vorteil, dass ein großer Teil der freigesetzten Energie direkt über den Wärmeträger abgeführt und ein unerwünschtes Überhitzen des Katalysators verhindert werden kann. Während ein Austauschgradient zwischen Prozessgas bzw. Reaktionszone und Wärmeträger bei der Wärmeübertragung nach dem Gleichstromprinzip mit zunehmender Kontaktdauer abnehmen würde, liegt bei Anwendung des Gegenstromprinzips über die gesamte Kontaktdauer ein gleichbleibender Austauschgradient vor. Da bei der katalytischen Oxidation des Prozessgases besonders große Mengen an Energie freigesetzt werden, hat sich eine Führung des Wärmeträgers im Gegenstromprinzip als besonders vorteilhaft erwiesen. Dabei wird die Reaktionszone derart effizient gekühlt, dass ein Überhitzen des Katalysators verhindert werden kann. Nicht zuletzt ermöglicht diese Kühlung der Reaktionszone auch die besonders effiziente Umsetzung des im Prozessgas enthaltenen Schwefeldioxids und gegebenenfalls Schwefeldampfes zu Schwefeltrioxid.

Bevorzugt wird der Wärmeträger in zumindest zwei Kreisläufen für das Schwefelbad und die katalytische Oxidation geführt. Auf diese Weise können Schwefelbad und Reaktionszone, in welcher die katalytische Oxidation stattfindet, unabhängig voneinander und unterschiedlich stark gekühlt werden. Hierdurch wird der Nachteil nur eines einzigen Kreislaufes vermieden, in welchem Schwefelbad und Reaktionszone nacheinander mit demselben Wärmeträger gekühlt werden, wodurch einer der beiden Prozesse nur mit bereits vorgeheiztem Wärmeträger gekühlt werden kann. Die bevorzugte Variante des Verfahrens nutzt zumindest zwei Kreisläufe, welche vorzugsweise mit Wärmeträger aus demselben Reservoir gespeist werden können, sodass für beide Kreisläufe derselbe Wärmeträger genutzt werden kann, ohne diesen zwischenzeitig kühlen zu müssen. Dabei wird der Wärmeträger mit der gleichen Temperatur in die Vorläufe beider Kreisläufe eingebracht, kann jedoch in den Rückläufen, also bei einer Rückkehr zum Reservoir, unterschiedliche Temperaturen aufweisen. Diese Temperaturunterschiede resultieren für gewöhnlich aus der bei der jeweiligen Reaktion freigesetzten Energie. Hierbei ist die Temperatur des Wärmeträgers aus dem Rücklauf des Schwefelbades in der Regel höher als jene des Wärmeträgers aus dem Rücklauf der katalytischen Oxidation.

Darüber hinaus ermöglichen die separierten Kreisläufe eine voneinander abweichende Flussgeschwindigkeit der Wärmeträger. Hierdurch kann die Flussgeschwindigkeit an die jeweiligen Reaktionen und/oder Reaktionsbedingungen angepasst werden. Beispielsweise kann die Temperatur des Schwefelbades vor dem Einleiten von Sauerstoff durch den Wärmeträger erhöht werden, um im Anschluss die Reaktion zwischen Schwefel und Sauerstoff besonders effizient durchführen zu können. Ebenso kann die Reaktionszone durch eine Anpassung der Flussgeschwindigkeit stärker gekühlt werden, sodass selbst bei einer hohen Last eine Überhitzung des Katalysators vermieden werden kann. Unter hoher Last wird üblicherweise die katalytische Oxidation von Prozessgasen mit besonders hohen Anteilen an Schwefeldioxid, insbesondere über 50 Vol.-%, verstanden.

Mit Vorteil werden die Kreisläufe zumindest abschnittsweise, insbesondere in einem Rücklauf, zusammengeführt. Hierdurch kann zum einen Platz gespart und zum anderen die Kreisläufe zusammen einer Energierückgewinnung zugeführt werden. Werden die Rückläufe beider Kreisläufe zusammengelegt, kann der darin geführte, gesammelte und erhitzte Wärmeträger auf einfache Weise zur Energierückgewinnung in einen Dampfkessel geleitet werden. Im Dampfkessel kann die vom Wärmeträger aufgenommene Wärme zum Erzeugen eines Wasserdampfes genutzt werden, welcher aus dem Prozess ausgeschleust und anderweitig genutzt werden kann. Der durch die Dampferzeugung gekühlte Wärmeträger wird anschließend wieder in das Reservoir und von dort aus erneut in die beiden Kreisläufe geführt.

Es hat sich bewährt, dass eine Temperatur des Prozessgases bis zu einem Ende der katalytischen Oxidation reduziert wird. Entsprechend kann auf ein gesondertes Kühlen des Prozessgases nach der katalytischen Oxidation verzichtet werden. Dieser Vorteil ergibt sich durch die Führung des Wärmeträgers innerhalb der Reaktionszone, wodurch bei der Reaktion von Schwefeldioxid und gegebenenfalls Schwefeldämpfen zu Schwefeltrioxid freigesetzte Energie besonders effizient abgeführt werden kann. Zudem kann durch den Wärmeträger nicht nur die freigesetzte Energie, sondern auch Wärme aus dem Prozessgas und/oder dem Katalysator abgeführt werden. Einerseits kann die Temperatur in der Reaktionszone durch die freigesetzte Energie der katalytischen Oxidation bereichsweise, vorzugsweise in einer ersten Hälfte der Reaktionszone, ansteigen, wobei in der Reaktionszone Temperaturen von bis zu 550 °C erreicht werden. Andererseits fällt die Temperatur in der Reaktionszone durch die effiziente Kühlung bereichsweise, insbesondere in einer zweiten Hälfte der Reaktionszone, unter jene Temperatur, mit welcher das Prozessgas erzeugt und in die Reaktionszone eingebracht wurde. Dementsprechend kann das Prozessgas während der katalytischen Oxidation derart gekühlt werden, dass dieses bei einem Eintritt in die Reaktionszone eine höhere Temperatur aufweist als bei einem Austritt aus der Reaktionszone. Beim Austritt aus der Reaktionszone weist das oxidierte Prozessgas für gewöhnlich Temperaturen zwischen 250 °C und 420 °C, bevorzugt zwischen 250 °C und 300 °C, auf. Darüber hinaus kann das oxidierte Prozessgas nach dem Austritt aus der Reaktionszone weiter gekühlt werden, sodass dieses eine Temperatur zwischen 120 °C und 200 °C, bevorzugt zwischen 130 °C und 160 °C, aufweist.

Um das produzierte Schwefeltrioxid auf effiziente Weise aus dem oxidierten Prozessgas herausfiltern zu können, kann bevorzugt vorgesehen sein, dass das Schwefeltrioxid des oxidierten Prozessgases im Bereich niedrigen Drucks in Schwefelsäure absorbiert wird. Hierbei wird das oxidierte Prozessgas in Schwefelsäure eingeleitet, wobei zumindest Teile des im oxidierten Prozessgas enthaltenen Schwefeltrioxids von der Schwefelsäure absorbiert werden, und Oleum erhalten. Anschließend kann das im oxidierten Prozessgas verbliebene Schwefeltrioxid in zumindest eine Absorptionsstufe geleitet werden. Aus dieser zumindest einen Absorptionsstufe kann das Schwefeltrioxid mit Schwefelsäure und/oder Oleum ausgewaschen werden, wobei das Schwefeltrioxid von der Schwefelsäure und/oder dem Oleum absorbiert wird. Letztlich wird das dabei erzeugte Oleum mitsamt dem darin absorbierten Schwefeltrioxid gesammelt, wobei ein Schwefeltrioxid-Anteil bis zu 70 Gewichtsprozent (im Folgenden: Gew.-%) betragen und der im Dampfkessel erzeugte Wasserdampf zur Temperierung genutzt werden kann. Etwaige weitere Bestandteile des oxidierten Prozessgases, wie Schwefeldioxid und/oder Sauerstoff, werden von der Schwefelsäure nicht absorbiert und fallen für gewöhnlich als Abgas an. Dieses Abgas wird für gewöhnlich einer Aufreinigung unterworfen und aus dem Prozess ausgekoppelt.

Mit Vorteil ist vorgesehen, dass in der Schwefelsäure absorbiertes Schwefeltrioxid abgezogen und mit Wasser, insbesondere mit Reinstwasser, zu Schwefelsäure in Elektronikqualität umgesetzt wird. Hierdurch kann eine Schwefelsäure mit besonders hoher Reinheit erhalten werden. Um das absorbierte Schwefeltrioxid wieder von der Schwefelsäure trennen zu können, kommt bevorzugt negativer Überdruck, oftmals auch als Unterdruck bezeichnet, zur Anwendung. Dabei wird zumindest ein Teil der Schwefelsäure, samt absorbiertem Schwefeltrioxid, in einen Desorber geleitet, um bei negativem Überdruck das absorbierte Schwefeltrioxid teilweise oder zur Gänze in die Gasphase zu bringen. Das gasförmige Schwefeltrioxid wird in zumindest einem Schritt gekühlt und verflüssigt, sodass dieses anschließend in einem Tank gesammelt und/oder teilweise als Produkt abgeführt werden kann. In weiterer Folge wird das im Tank gesammelte Schwefeltrioxid mit Wasser und optional Wasserstoffperoxid, insbesondere einer Wasserstoffperoxidlösung, zu Schwefelsäure in Elektronikqualität umgesetzt werden. Dabei können sowohl destilliertes Wasser als auch demineralisiertes Wasser verwendet werden. Bevorzugt wird jedoch Wasser von besonders hoher Reinheit, sogenanntes Reinstwasser, verwendet, welches in der Regel durch Umkehrosmose oder Destillation sowie anschließender Behandlung mit lonentauschern und/oder diversen Filtrationsmethoden gewonnen wird. Bei der Umsetzung von Schwefeltrioxid zu Schwefelsäure in Elektronikqualität kann auch Wasserstoffperoxid, bevorzugt in wässriger Lösung mit 5 Gew.-% bis 15 Gew.-%, besonders bevorzugt 6 Gew.-% bis 10 Gew.-%, zugesetzt werden. Hierdurch kann bei der Umsetzung des Schwefeltrioxids zu Schwefelsäure in Elektronikqualität auch teilweise Peroxomonoschwefelsäure gebildet werden, welche für deren stark oxidierende Eigenschaften bekannt ist. Gerade deshalb wird Peroxomonoschwefelsäure in der Elektronikindustrie auch als Piranhasäure bezeichnet.

Alternativ kann auch das Oleum, in welcher das Schwefeltrioxid absorbiert ist, mit Wasser zu Schwefelsäure in Elektronikqualität umgesetzt werden. Analog zur Herstellung aus Schwefeltrioxid ist bei dieser Herstellungsart die Reinheit des Wassers von enormer Bedeutung, weshalb auch hier vorzugsweise Reinstwasser zu Anwendung kommt.

Schwefelsäure in Elektronikqualität wird oftmals als Schwefelsäure in VLSI-Qualität bezeichnet, wobei die Abkürzung VLSI (very large scale integration) aus der Elektroindustrie kommt und sich auf einen Integrationsgrad von integrierten Schaltkreisen bezieht. Schwefelsäure in Elektronikqualität weist für gewöhnlich zumindest einen Schwefelsäuregehalt von 95 % auf und zeichnet sich durch besonders geringe Anteile von Verunreinigungen, wie Übergangsmetallen, Alkali- und Erdalkalimetallen sowie Halbmetallen, aus. Ebenfalls ist der Anteil an Partikeln mit einer durchschnittlichen Größe kleiner gleich 1 µm besonders gering. Um Schwefelsäure in Elektronikqualität herstellen zu können, wird herkömmlicherweise Schwefeltrioxid aus Schwefelsäure abdestilliert mit Reinstwasser umgesetzt und im Anschluss mehreren Reinigungsschritten unterzogen. Mit dem vorliegenden Verfahren ist es jedoch möglich, Schwefeltrioxid von besonders hoher Reinheit zu erzeugen und aus diesem direkt Schwefelsäure in Elektronikqualität herzustellen. Dabei kann auf weitere Schritte zur Reinigung der erzeugten Schwefelsäure verzichtet werden, sodass ein apparativer Aufwand und damit auch Kosten reduziert werden können. Dieser Vorteil kann auch dadurch beeinflusst werden, dass der flüssige Schwefel vor der Bildung des Schwefelbades filtriert und von Verunreinigungen befreit wird. Außerdem findet die Erzeugung des Prozessgases bei besonders niedrigen Temperaturen statt, sodass die Bildung von unerwünschten Nebenprodukten verhindert werden kann. Letztlich können auch alle Kontaktflächen der Schwefelsäure und/oder des Oleums mit chemikalienbeständigen Kunststoffen, beispielsweise mit Fluorkohlenwasserstoffen, beschichtet sein, um ein Herauslösen von Fremdstoffen aus einem darunterliegenden Material, insbesondere Stahl, und damit eine Verunreinigung des Produktes zu verhindern.

Die vorrichtungsmäßige Aufgabe wird dadurch gelöst, dass bei einer Vorrichtung der eingangs genannten Art im Generator innerhalb des Schwefelbades ein erster Wärmetauscher positioniert ist, durch welchen eine Reaktionswärme abführbar ist, und dem Reaktor ein Ventil nachgeschaltet ist, über welches ein Druck im Generator und Reaktor regelbar ist.

Daraus ergibt sich der Vorteil, dass das Schwefelbad über den ersten Wärmetauscher temperierbar ist und das Prozessgas bei besonders niedriger Temperatur, insbesondere mit der gleichen Temperatur wie das Schwefelbad, erzeugt werden kann. Üblicherweise wird das Prozessgas in einem aus Stahl gefertigten Generator erzeugt, welcher bevorzugt in einem unteren Bereich eine Schwefelzufuhr aufweist. Durch diese Schwefelzufuhr kann flüssiger Schwefel in den Generator eingebracht werden, sodass sich im Inneren des Generators ein Schwefelbad bildet. Für gewöhnlich wird der flüssige Schwefel noch vor dem Einbringen in den Generator von Verunreinigungen befreit, insbesondere gefiltert, und optional auch erhitzt. Zudem kann im unteren Bereich des Generators, insbesondere an einer Unterseite, auch ein Schwefelablass vorgesehen sein. Über diesen Schwefelablass können flüssiger Schwefel und etwaige Verunreinigungen aus dem Schwefelbad entfernt werden. Dabei kann die Wärme des abgelassenen flüssigen Schwefels sowie gegebenenfalls der Verunreinigungen zum Erhitzen des flüssigen Schwefels der Schwefelzufuhr genutzt werden.

Das Schwefelbad selbst wird für gewöhnlich über den ersten Wärmetauscher temperiert, wobei der Wärmeträger durch den Wärmetauscher geleitet wird. Dabei wird das Schwefelbad, abhängig von einer Vorlauftemperatur des Wärmeträgers und der Temperatur des Schwefelbades selbst, entweder erhitzt oder gekühlt und über den Wärmeträger entsprechend Wärme zugeführt oder abgeführt. Für gewöhnlich ist der erste Wärmetauscher derart ausgebildet und innerhalb des Schwefelbades positioniert, dass sich eine besonders große Kontaktfläche ergibt. Um eine solche Kontaktfläche zwischen Schwefelbad und dem ersten Wärmetauscher auf einfache Weise bereitzustellen, wird vorzugsweise ein Plattenwärmetauscher oder ein Rohrbündelwärmetauscher eingesetzt. Solche Wärmetauscher ermöglichen ein Zuführen von Wärme in das Schwefelbad sowie ein Abführen von Wärme aus dem Schwefelbad auf besonders effiziente Art und Weise. Dabei kann der erste Wärmetauscher so ausgebildet sein, dass sich dieser über zumindest 30 %, insbesondere zumindest 50 %, einer Höhe des Generators sowie zumindest 60 %, bevorzugt zumindest 80 %, eines Querschnitts des Generators erstreckt, wobei der Querschnitt normal zur Höhe orientiert ist. Darüber hinaus ist der erste Wärmetauscher bevorzugt mittig im Generator angeordnet, wobei auch mehrere, insbesondere äquidistant angeordnete, Wärmetauscher vorgesehen sein können. In diesem Fall können die Wärmetauscher auch kleiner ausgebildet sein.

Außerdem weist der Generator, bevorzugt an einem oberen Ende, eine Sauerstoffzufuhr auf, um Sauerstoff in den Generator, insbesondere in das Schwefelbad, einbringen zu können. Dabei ist die Sauerstoffzufuhr in der Regel als Führungsmittel, bevorzugt als Rohrleitung, ausgebildet, sodass der Sauerstoff im Inneren des Generators an ein unteres Ende des Schwefelbades transportiert werden kann. Zudem weist die Sauerstoffzufuhr im Bereich des unteren Endes des Schwefelbades mehrere Einlässe auf, um den Sauerstoff von unten in das Schwefelbad einbringen zu können. Als Einlässe sind zumeist Öffnungen in der Sauerstoffzufuhr vorgesehen, wobei diese vorzugsweise äquidistant angeordnet sind. In einer bevorzugten Variante weist die Sauerstoffzufuhr einen oder mehrere gebogene Bereiche auf, wodurch die Kontaktfläche mit dem Schwefelbad vergrößert und eine Wärmeübertragung zwischen Schwefelbad und Sauerstoff auf effiziente Weise erfolgen kann. Hierdurch wird die Temperatur des Sauerstoffes an jene des Schwefelbades angeglichen, sodass beide Edukte vor einer Zusammenführung eine ähnliche Temperatur, insbesondere die gleiche Temperatur, aufweisen.

Alternativ kann auch eine gesonderte Heizvorrichtung vorgesehen sein, welche den zuzuführenden Sauerstoff unabhängig von einem Verlauf der Sauerstoffzufuhr innerhalb des Schwefelbades erhitzt und an die Temperatur des Schwefelbades angleicht, ehe der Sauerstoff in dieses eingeleitet wird.

Das erzeugte Prozessgas weist durch die besonders effiziente Wärmeabführung mittels erstem Wärmetauscher üblicherweise eine auf die nachfolgende katalytische Oxidation ausgelegte Temperatur auf. Außerdem kann eine weitere Sauerstoffzufuhr vorgesehen sein, welche außerhalb des Generators verläuft und dem erzeugten Prozessgas im Bereich einer ersten Leitung zusätzlichen Sauerstoff beimengt, um im Reaktor eine möglichst vollständige katalytische Oxidation zu erzielen. Für gewöhnlich sind die Sauerstoffzufuhr und die weitere Sauerstoffzufuhr außerhalb des Generators miteinander verbunden. Des Weiteren kann vorgesehen sein, dass der Sauerstoff in der weiteren Sauerstoffzufuhr vorgeheizt wird, ehe dieser dem Prozessgas beigemengt wird. Alternativ kann die weitere Sauerstoffzufuhr in einem oberen Bereich innerhalb des Generators angeordnet sein und einen oder mehrere Einlässe aufweisen. Dabei ist, analog zu den Einlässen der Sauerstoffzufuhr im unteren Bereich des Schwefelbades, auch bei Einlässen der weiteren Sauerstoffzufuhr eine Ausbildung als Öffnungen zweckmäßig. Bei einer derartigen weiteren Sauerstoffzufuhr kann der Sauerstoff ebenfalls durch Führung innerhalb des Schwefelbades und/oder über eine gesonderte Heizvorrichtung vorgeheizt werden, sodass dieser eine ähnliche oder die gleiche Temperatur wie das Prozessgas aufweist. In dieser Variante kann die Sauerstoffzufuhr auch die Merkmale der weiteren Sauerstoffzufuhr umfassen, sodass diese sowohl zur Erzeugung des Prozessgases als auch zur Beimengung von Sauerstoff zum Prozessgas genutzt wird.

Zudem ist ein Reaktor mit einer Reaktionszone zur Oxidation von Schwefeldioxid zu Schwefeltrioxid vorgesehen, welcher mit dem Generator in Verbindung steht. Dabei können Generator und Reaktor in einem gemeinsamen Gehäuse zusammengefasst, also integral ausgebildet, sein oder über die erste Leitung miteinander in Verbindung stehen. Sind Generator und Reaktor in einem gemeinsamen Gehäuse zusammengefasst, kann die erste Leitung entfallen und sich ein besonders platzsparender und einfacher Aufbau der Vorrichtung ergeben. Daher können im Unterschied zu herkömmlichen Anlagen zur Schwefelsäureherstellung mit einer derartigen Vorrichtung auch bei begrenztem Platzangebot besonders große Mengen an Schwefeltrioxid bzw. Schwefelsäure erzeugt werden. Hierbei ist ein Inneres des gemeinsamen Gehäuses für gewöhnlich unterteilt, sodass beide Prozesse bei bevorzugten Bedingungen ablaufen können. Vorzugsweise ist zum Unterteilen ein Tropfenabscheider zwischen einem Bereich des Generators und einem Bereich des Reaktors im gemeinsamen Gehäuse angeordnet. Durch den Tropfenabscheider kann etwaiger im Prozessgas befindlicher Schwefeldampf zumindest teilweise in den Bereich des Generators rückgeführt werden. Hierzu hat sich ein aus einem Silicat gefertigter Tropfenabscheider bewährt, da dieser gegenüber dem Prozessgas besonders beständig ist.

Darüber hinaus kann die weitere Sauerstoffzufuhr in das gemeinsame Gehäuse führen, sodass dem Prozessgas vor oder nach Passieren des Tropfenabscheiders Sauerstoff beimengbar ist. Durch Beimengung zusätzlichen Sauerstoffes zum Prozessgas kann bei der Oxidation im Bereich des Reaktors eine möglichst vollständige Umsetzung erreicht werden. Bevorzugt weist die weitere Sauerstoffzufuhr innerhalb des gemeinsamen Gehäuses vor dem Tropfenabscheider zumindest einen Einlass auf, wobei vorzugsweise mehrere, insbesondere äquidistant angeordnete, zum Tropfenabscheider gerichtete Einlässe vorgesehen sind.

Im Inneren des gemeinsamen Gehäuses angeordnete Rohre sind vorzugsweise aus chemisch und mechanisch beständigen Materialien wie Siliciumcarbid gebildet.

Außerdem kann durch den Entfall der ersten Leitung bei einem derartigen Aufbau das Risiko einer Sublimation von Schwefel in der ersten Leitung weiter verringert werden. Ferner liegt die Temperatur des aus dem Bereich des Reaktors austretenden oxidierten Prozessgases unter jener des vom Bereich des Generators kommenden Prozessgases, sodass mit einem Entfall der ersten Leitung zwischen Generator und Reaktor auch auf eine Reihe von Dichtungen verzichtet werden, welche aufgrund hoher thermischer, mechanischer und chemischer Belastung durch das vom Generator kommende Prozessgas besonders beansprucht sind. Zweckmäßigerweise kann das gemeinsame Gehäuse an einem unteren Ende im Bereich des Generators und einem oberen Ende im Bereich des Reaktors eine ähnliche, insbesondere die gleiche, Temperatur aufweisen. Diese Temperatur liegt für gewöhnlich in einem Bereich zwischen 220 °C und 350 °C, bevorzugt bei 250 °C. Hierdurch kann auf spezielle angefertigte Dichtungen aus chemisch und thermisch beständigen Materialien für die am Auslass des gemeinsamen Gehäuses zweite Leitung verzichtet werden. Dementsprechend hat sich der Betrieb einer derartigen Vorrichtung als besonders wartungsarm und damit kostengünstig erwiesen.

Sind Generator und Reaktor über die erste Leitung miteinander verbunden, so wird das Prozessgas über diese in den Reaktor, insbesondere in die Reaktionszone, eingebracht. Eine derartige Vorrichtung bietet den Vorteil, dass Bauteile des Generators und/oder Reaktors besonders einfach gewartet oder ausgetauscht werden können.

Mit Vorteil ist der Reaktor aus Stahl gefertigt. Darüber hinaus ist in der Reaktionszone ein Katalysator vorgesehen, um die Oxidation von Schwefeldioxid zu Schwefeltrioxid zu beschleunigen und die Effizienz der Umsetzung des Prozessgases zu erhöhen. Der Katalysator besteht in der Regel aus einem Träger, beispielsweise aus Silikat oder oxidischer Keramik, auf dessen Oberfläche katalytisch aktive Übergangsmetallpartikel und/oder Übergangsmetallverbindungen, insbesondere Edelmetallpartikel, aufgebracht sind. Vorzugsweise wird die katalytische Oxidation mit einem Platinkatalysator durchgeführt, sodass neben Schwefeldioxid auch etwaige im Prozessgas enthaltene Schwefeldämpfe, insbesondere zu Schwefeltrioxid, umgesetzt werden können. Durch die katalytische Oxidation wird der Schwefeltrioxid-Anteil des Prozessgases derart erhöht, dass dieses die Hauptkomponente des oxidierten Prozessgases darstellt.

Darüber hinaus ist dem Reaktor ein Ventil nachgeschaltet, über welches ein Druck im Generator und Reaktor regelbar ist. Dies bietet den Vorteil, dass sowohl die Erzeugung des Prozessgases als auch dessen katalytische Oxidation bei erhöhtem Druck stattfinden können. Des Weiteren kann das oxidierte Prozessgas durch ein solches Ventil bei anderen Druckbedingungen, nämlich im Bereich niedrigen Drucks, weiterverarbeitet werden. Dementsprechend wird die Vorrichtung durch das dem Reaktor nachgeschaltete Ventil den Bereich hohen Drucks und den Bereich niedrigen Drucks unterteilt.

Mit Vorteil ist ein Absorber zum Absorbieren des Schwefeltrioxids in Schwefelsäure vorgesehen, welcher einen Prozessgaseinlass, einen Produktauslass und einen Abgasauslass aufweist und über eine zweite Leitung mit dem Reaktor verbunden ist. Hierdurch kann im oxidierten Prozessgas enthaltenes Schwefeltrioxid zu Schwefelsäure, insbesondere Schwefelsäure in Elektronikqualität, verarbeitet werden. Das oxidierte Prozessgas wird über die zweite Leitung vom Reaktor zum Absorber geleitet und, bevorzugt direkt, vom Prozessgaseinlass in die Schwefelsäure eingeleitet, sodass Oleum entsteht. Der Absorber ist für gewöhnlich aus Stahl, insbesondere aus Schwarzstahl, gefertigt und ist auf einer Innenseite zumindest bereichsweise mit chemikalienresistenten Kunststoffen beschichtet. Um eine Reaktion zwischen der Stahlwand und der Schwefelsäure zu verhindern, handelt es sich bei diesen Kunststoffen vorzugsweise um Fluorpolymere wie Polytetrafluorethylen (PTFE) oder Perfluoralkoxy-Polymere (PFA).

In einem unteren Bereich des Absorbers wird die Schwefelsäure in Form eines Bades vorgelegt. Beim Einleiten des oxidierten Prozessgases in das Bad wird ein Teil des Schwefeltrioxids von der Schwefelsäure absorbiert. Darüber hinaus fließt durch den Produktauslass des Absorbers stetig ein Teil des Bades ab. Nicht absorbierte Bestandteile des oxidierten Prozessgases treten mit einer, bevorzugt über dem Bad angeordneten, Absorptionsstufe in Wechselwirkung. Die Absorptionsstufe wird regelmäßig mit Schwefelsäure besprüht und/oder gespült, sodass in der Absorptionsstufe befindliches Schwefeltrioxid absorbiert und aus der Absorptionsstufe entfernt werden kann. Etwaige übrige Bestandteile des Prozessgases, wie Schwefeldioxid und/oder Sauerstoff, werden nach der Absorptionsstufe als Abgas über einen Abgasauslass entfernt und mittels Abgasbehandlung aufgereinigt. Zumeist ist die Anordnung von ein bis zwei Absorptionsstufen im Inneren des Absorbers ausreichend, um das im oxidierten Prozessgas enthaltene Schwefeltrioxid zu entfernen. Alternativ können mehrere Absorptionsstufen vorgesehen sein, um den Schwefeltrioxid-Anteil des oxidierten Prozessgases auf besonders effiziente Weise zu entfernen.

Sind zwei Absorptionsstufen vorgesehen, wird die erste Absorptionsstufe für gewöhnlich mit Oleum aus dem Produktauslass, welches optional über einen Wärmetauscher gekühlt werden kann, besprüht und/oder gespült. Die zweite Absorptionsstufe wird üblicherweise mit Schwefelsäure besprüht und/oder gespült, welche vorzugsweise aus dem Desorber stammt. Hierbei wird dem Desorber Schwefelsäure, im Wesentlichen das vom Schwefeltrioxid-Anteil befreite Oleum aus einem Bad im unteren Bereich des Desorbers, entnommen und über eine weitere Leitung zurück zur zweiten Absorptionsstufe geführt. Im Zuge dessen kann die Schwefelsäure auch über einen Wärmetauscher temperiert werden, ehe mit dieser die zweite Absorptionsstufe besprüht und/oder gespült wird.

Der Desorber selbst ist bevorzugt aus Stahl gefertigt und weist auf der Innenseite zumindest bereichsweise eine chemikalienresistente Kunststoffbeschichtung, insbesondere aus Fluorpolymeren wie PTFE oder PFA auf. Zum Befüllen des Desorbers wird das aus dem Produktauslass fließende Oleum in den Desorber gepumpt. In einem unteren Bereich des Desorbers sammelt sich ein Bad aus Oleum an. Um das im Oleum absorbierte Schwefeltrioxid in die Gasform zu überführen, kann im Desorber, insbesondere mit einer Vakuumpumpe, ein negativer Überdruck erzeugt werden. Das gasförmige Schwefeltrioxid wird vorzugsweise aus einem oberen Bereich des Desorbers entnommen, in zumindest einem Kondenser mittels Wärmetauscher gekühlt, verflüssigt und über eine Leitung zum Tank geleitet. Die übrige Gasphase kann mit dem Abgas aus dem Abgasauslass des Absorbers zusammengeführt, einer Aufreinigung unterworfen und aus dem Verfahren abgeführt werden.

Optional kann zumindest ein weiterer dem ersten Kondenser nachgeschalteter Kondenser vorgesehen sein, um in der Gasphase verbliebenes Schwefeltrioxid verflüssigen zu können. Sind mehrere Kondenser vorgesehen, kann zwischen diesen bereits ein Teil des Schwefeltrioxids als Produkt abgeführt werden. Dem im Tank befindlichen Schwefeltrioxid wird über Leitungen Wasser, insbesondere Reinstwasser, und optional Wasserstoffperoxid, insbesondere in Form einer wässrigen Lösung, zugesetzt, um Schwefelsäure in Elektronikqualität zu erhalten. Dabei ist der Tank analog zum Absorber und Desorber vorzugsweise aus Stahl gebildet und zumindest bereichsweise mit chemikalienresistenten Kunststoffen ausgekleidet.

Es hat sich bewährt, dass das Ventil als Regelventil, insbesondere als Druckventil, ausgebildet und mit der zweiten Leitung verbunden ist. Dadurch können der Generator und der Reaktor unter einem bevorzugten Druck von 2 bar bis 25 bar, besonders bevorzugt von 4 bar bis 20 bar, und der Absorber zeitgleich bei vergleichsweise niedrigem Druck von unter 2 bar, insbesondere Umgebungsdruck, betrieben werden. Zu den vorstehend genannten Vorteilen einer derart betriebenen Vorrichtung, insbesondere bei der Erzeugung und katalytischen Oxidation des Prozessgases, können sowohl Generator als auch Reaktor beim Betrieb mit technischem oder reinem Sauerstoff und einem Druck von 20 bar um einen Faktor 100 verkleinert werden. Die dadurch erzielbare Verkleinerung der Vorrichtung ermöglicht einen besonders geringen Platzbedarf, sodass anstatt einer herkömmlichen Anlage zur Herstellung von Schwefelsäure, mehrere derartige Vorrichtungen parallel betrieben werden können. Dies ermöglicht die Herstellung von Schwefelsäure, insbesondere in Elektronikqualität, in besonders großen Mengen und besonders kurzer Zeit. Zudem kann eine Produktionsmenge durch eine Anzahl der Vorrichtungen an individuelle Erfordernisse angepasst werden. Darüber hinaus kann auch bei beengten Platzverhältnissen, welche für herkömmliche Anlagen nicht ausreichend sind, eine besonders große Produktionsmenge erzielt werden.

Vorzugsweise ist in der Reaktionszone ein zweiter Wärmetauscher vorgesehen, um Wärme aus der Reaktionszone abzuführen. Hierdurch können sowohl Prozessgas als auch Katalysator besonders effizient gekühlt werden. Mit Vorteil sind in der Reaktionszone sowohl ein Katalysator als auch ein Wärmetauscher angeordnet. Als Wärmetauscher kommt vorzugsweise ein Plattenwärmetauscher oder ein Rohrbündelwärmetauscher zum Einsatz, welcher Wärme aus der Reaktionszone, dem Prozessgas und dem Katalysator abführen kann. Dabei hat sich der Betrieb im Gegenstromprinzip bewährt, um einen besonders effizienten Wärmeaustausch in der Reaktionszone sicherstellen zu können. Abhängig von der Anzahl und Größe der Reaktionszone kann es vorteilhaft sein, wenn mehrere Wärmetauscher zum Einsatz kommen. Vorzugsweise wird in jeder Reaktionszone zumindest ein Wärmetauscher angeordnet, welcher üblicherweise über einen eigenen Kreislauf mit Wärmeträger versorgt wird. Teilen sich Generator und Reaktor ein gemeinsames Gehäuse, hat es sich bewährt, dass der erste Wärmetauscher und der zweite Wärmetauscher über einen einzigen Kreislauf mit Wärmeträger versorgt werden. Vorzugsweise sind der erste Wärmetauscher und der zweite Wärmetauscher dabei parallel verknüpft, wodurch Reaktionswärme besonders effizient aus dem Generator und der Reaktionszone abführbar ist.

Es hat sich bewährt, dass ein Reservoir zur Versorgung der Wärmetauscher mit einem Wärmeträger vorgesehen ist. Dies bietet den Vorteil, dass der Wärmeträger gesammelt und gegebenenfalls temperiert werden kann, um eine besonders konstante Vorlauftemperatur des Wärmeträgers zu erzielen. Vorzugsweise wird der Wärmeträger im Reservoir in Form eines Bades gesammelt. Des Weiteren weist das Reservoir zumindest einen Auslass, zumindest einen Einlass und optional einen Wärmetauscher auf. Über Letzteren kann ein Wärmeaustausch erfolgen, sodass der im Reservoir befindliche Wärmeträger wahlweise erhitzt oder gekühlt werden kann. Alternativ kann zum Erhitzen des Wärmeträgers auch eine elektrische Heizung im Inneren des Reservoirs angeordnet sein. Da sowohl das Erzeugen des Prozessgases als auch dessen katalytische Oxidation in Form von exothermen Reaktionen ablaufen, wird der im Reservoir eingesetzte Wärmetauscher für gewöhnlich zum Abführen von Wärme genutzt.

Der zumindest eine Auslass des Reservoirs ermöglicht die Führung des Wärmeträgers in einem Kreislauf, wobei der Wärmeträger das Reservoir im Vorlauf über den Auslass mit einer bevorzugten Temperatur zwischen 250 °C und 400 °C, besonders bevorzugt mit einer Temperatur von 350 °C, verlässt.

Der zumindest eine Einlass dient zum Rückführen des Wärmeträgers in das Reservoir. Abhängig von der Anzahl an Kreisläufen können auch mehrere Einlässe zum Rückführen des Wärmeträgers vorgesehen sein. In der Regel weist der Wärmeträger beim Rückführen, also im Rücklauf, eine höhere Temperatur als im Vorlauf auf. Dabei liegen Temperaturen des Wärmeträgers im Rücklauf bei 400 °C bis 700 °C, bevorzugt bei 400 °C bis 550 °C.

Um Generator und Reaktor unabhängig voneinander mit Wärmeträger versorgen und eine besonders effiziente Wärmeabführung erzielen zu können, ist bevorzugt vorgesehen, dass für den ersten Wärmetauscher im Generator und den zweiten Wärmetauscher im Reaktor jeweils ein Kreislauf vorgesehen ist. Der Wärmeträger wird hierfür zweckmäßig in Rohren mit rundem Querschnitt geführt, wobei diese vorzugsweise platzsparend angeordnet sind. Dabei verlässt der Wärmeträger das Reservoir im Vorlauf vorzugsweise über zwei unterschiedliche Auslässe, sodass jeweils ein Kreislauf für den Generator und ein Kreislauf für den Reaktor entsteht. Hierbei kann jedem Auslass eine Pumpe zugeordnet sein, um die Flussgeschwindigkeit des Wärmeträgers regulieren zu können. Zudem kann in jedem Kreislauf ein weiterer Wärmetauscher zur individuellen Temperierung des Wärmeträgers vorgesehen sein. Alternativ kann der Wärmeträger das Reservoir auch über einen einzelnen Auslass, insbesondere als einzelner Strom, verlassen und anschließend in Teilströme geteilt werden. Dies hat sich insbesondere bei einem Aufbau mit Generator und Reaktor in einem gemeinsamen Gehäuse bewährt, wobei der erste Wärmetauscher und der zweite Wärmetauscher parallel über denselben Vorlauf betrieben werden.

Nach erfolgtem Wärmeaustausch in Generator und Reaktor werden die Kreisläufe im Rücklauf vorzugsweise zusammengeführt. Entsprechend kann das Reservoir mit nur einem Einlass versehen sein. Alternativ kann die Zusammenführung der Rückläufe aber auch unterbleiben, sodass eine Ausbildung des Reservoirs mit zwei Einlässen zu bevorzugen wäre. Weiters kann entlang des Rücklaufs ein Dampfkessel angeordnet sein, in welchem die im Wärmeträger gespeicherte Wärme zur Erzeugung von Wasserdampf genutzt wird. Der erzeugte Wasserdampf kann im Anschluss aus dem Prozess ausgeschleust und/oder zur Temperierung des aus dem Produktauslass des Absorbers kommenden Oleums genutzt werden. Hierdurch wird die Temperatur des Wärmeträgers durch ein Zwischenschalten des Dampfkessels noch vor dem Eintritt in das Reservoir reduziert. Darüber hinaus kann der Wasserzulauf des Dampfkessels genutzt werden, um Wärme aus dem oxidierten Prozessgas, welches in der zweiten Leitung geführt wird, abzuführen. Außerdem kann der Wasserzulauf des Dampfkessels auch über einen Speicher bereitgestellt sein, welcher über einen Frischwasserzulauf, einen Rücklauf des Wasserdampfes vom Produktauslass und einen Überlauf gespeist wird. Der Überlauf kann auch als Schutzmechanismus dienen und erfolgt für gewöhnlich dann, wenn eine Wassermenge im Wasserzulauf einen Bedarf des Dampfkessels übersteigt. In diesem Fall wird das vom Speicher eingespeiste Wasser nach der Wärmeübertragung mit dem oxidierten Prozessgas zurück in den Speicher geleitet. Der Überlauf kann beispielsweise durch ein Überdruckventil gesteuert sein. Zudem können dem Frischwasserzulauf und dem Wasserzulauf des Dampfkessels Ventile nach- bzw. vorgeschaltet sein, um die Wassermenge zu regulieren.

Es hat sich bewährt, dass als Wärmeträger eine Salzschmelze, bevorzugt aus Alkalinitraten und/oder -nitriten, vorgesehen ist. Hierdurch kann Wärme aus dem Schwefelbad und der Reaktionszone besonders effizient abgeführt werden. Für gewöhnlich werden zum Erzeugen der Salzschmelze sowohl Alkalinitrate als auch Alkalinitrite miteinander vermischt, wobei vorzugsweise Dreistoffgemische aus Natriumnitrat (NaNO₃), Natriumnitrit (NaNO₂) und Kaliumnitrat (KNO₃) zur Anwendung kommen. Dabei können die Anteile dieser Bestandteile derart aufeinander abgestimmt werden, dass die gewünschte Schmelztemperatur erreicht wird. Alternativ kann die Salzschmelze auch aus anderen Bestandteilen zusammengesetzt sein. In der Regel weisen derartige Salzschmelzen, oftmals auch als Wärmeträgersalz oder Wärmeübertragungssalz bezeichnet, einen für Salze unüblichen niedrigen Schmelzpunkt auf. Dieser kann für Salzschmelzen aus den vorzugsweise verwendeten Bestandteilen zwischen 145 °C und 300 °C liegen. Darüber hinaus zeichnen sich derartige Salzschmelzen auch durch einen geringen Dampfdruck, eine niedrige Viskosität sowie eine hohe thermische Stabilität mit Zersetzungspunkten jenseits von 450 °C aus. Für Systeme mit Schmelzpunkten bei ungefähr 145 °C kann erst im Temperaturbereich von 455 °C bis 540 °C eine langsame thermische Zersetzung der Salzschmelze festgestellt werden. Entsprechend können derartige Salzschmelzen in einem Temperaturbereich von 150 °C bis 540 °C ohne nennenswerte Volumenexpansion betrieben werden. Daher findet sowohl bei der Verwendung als Wärmeträger für den Generator als auch für den Reaktor im Kreislauf keine Druckerhöhung durch Zersetzung der Salzschmelze statt. Bevorzugt werden als Wärmeträger aber Salzschmelzen mit Schmelztemperaturen über 150 °C eingesetzt, wodurch auch ein thermisches Stabilitätsfenster zu höheren Temperaturen verschoben wird.

Entsprechend den vorstehend erläuterten Vorteilen besteht eine erfindungsgemäße Verwendung darin, eine erfindungsgemäße Vorrichtung zur Herstellung von Schwefeltrioxid und optional Schwefelsäure, insbesondere Schwefelsäure in Elektronikqualität, einzusetzen.

Weitere Merkmale, Vorteile und Wirkungen der Erfindung ergeben sich aus den nachfolgenden Darstellungen von Ausführungsbeispielen. Die Zeichnungen, auf welche dabei Bezug genommen wird, zeigen:
Fig. 1 zeigt ein Fließschema einer ersten Ausführungsvariante eines Verfahrens;
Fig. 2 zeigt ein Fließschema einer zweiten Ausführungsvariante des Verfahrens.

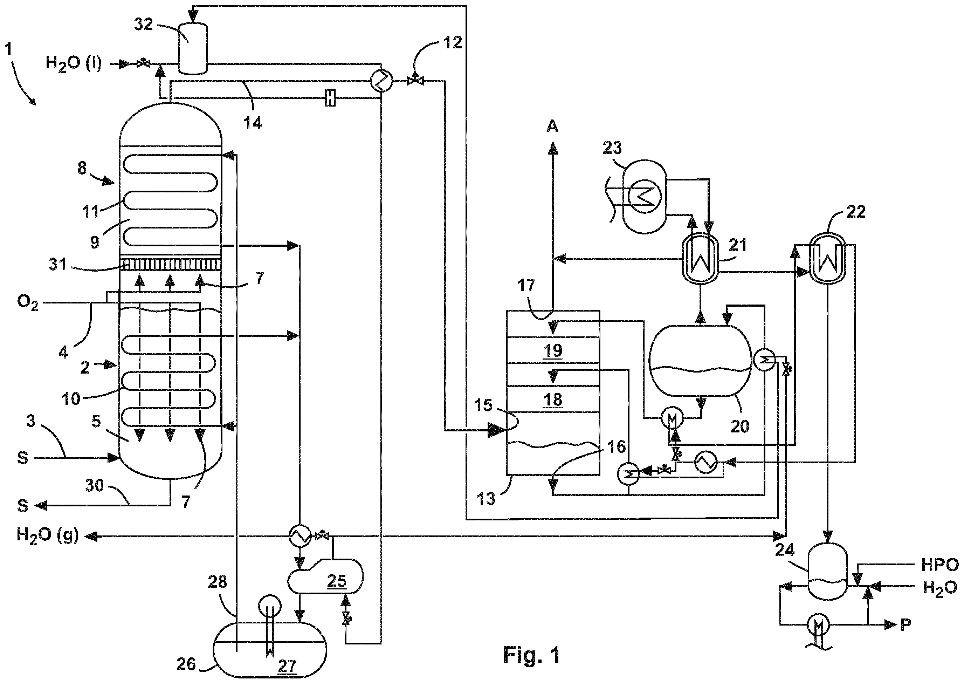

In Fig. 1 ist ein Fließschema einer Ausführungsvariante eines Verfahrens sowie eine hierzu genutzte Vorrichtung 1 dargestellt. Das Verfahren beginnt auf Seite der Zufuhr mit einem Einbringen von flüssigem Schwefel S über die Schwefelzufuhr 3 in einen Generator 2, welcher in einem gemeinsamen Gehäuse mit einem Reaktor 8 angeordnet ist. Das gemeinsame Gehäuse ist vorzugsweise aus Stahl gefertigt und weist entsprechende Bereiche für den Generator 2 und den Reaktor 8 auf, welche über einen Tropfenabscheider 31 voneinander getrennt sind. Entsprechend bildet sich beim Einbringen des flüssigen Schwefels S im Bereich des Generators 2 ein Schwefelbad 5. Außerdem ist im Bereich des Generators 2 ein erster Wärmetauscher 10 und im Bereich des Reaktors 8 ein zweiter Wärmetauscher 11 angeordnet. Der erste Wärmetauscher 10 ist derart im Bereich des Generators 2 angebracht und innerhalb des Schwefelbades 5 positioniert, dass dessen Oberfläche direkt mit dem Schwefelbad 5 in Kontakt steht. Dadurch kann eine besonders effiziente Wärmeübertragung zwischen dem ersten Wärmetauscher 10, insbesondere einem darin geführten Wärmeträger 27, und dem Schwefelbad 5 stattfinden. Für gewöhnlich wird der flüssige Schwefel S vor dem Einbringen in das gemeinsame Gehäuse filtriert und von Verunreinigungen befreit. Um eine Ansammlung von etwaigen im flüssigen Schwefel S verbliebenen Verunreinigungen im Schwefelbad 5 zu verhindern, ist ein Schwefelablass 30 vorgesehen. Über den Schwefelablass 30 kann das Schwefelbad 5 während des Verfahrens kontinuierlich oder in Intervallen regeneriert und im Bereich des Generators 2 am Boden des gemeinsamen Gehäuses angesammelte Verunreinigungen entfernt werden. Dabei kann eine Wärme des abgelassenen flüssigen Schwefels S zur Erwärmung des zugeführten flüssigen Schwefels S genutzt werden.

Darüber hinaus ist eine Sauerstoffzufuhr 4 vorgesehen, über welche Sauerstoff O₂ in das gemeinsame Gehäuse eingebracht wird, wobei die Sauerstoffzufuhr 4 in der vorliegenden Ausbildungsvariante noch außerhalb des gemeinsamen Gehäuses in zwei Sauerstoffzufuhren 4 geteilt wird. Dabei sind beide Sauerstoffzufuhren 4 vorzugsweise als Rohre ausgebildet, wovon eine Sauerstoffzufuhr 4 durch das Schwefelbad 5 geführt und die andere Sauerstoffzufuhr 4 zum Tropfenabscheider 31 gerichtete, vorzugsweise äquidistant angeordnete, Einlässe 7 aufweist. Bei der innerhalb des Schwefelbades 5 geführten Sauerstoffzufuhr 4 findet ein Wärmeaustausch statt, wodurch der in der Sauerstoffzufuhr 4 geführte Sauerstoff O₂ vorgeheizt wird. Die innerhalb des Schwefelbades 5 geführte Sauerstoffzufuhr 4 weist endseitig mehrere Einlässe 7 auf, welche am unteren Ende des Schwefelbades 5 positioniert sind. Dabei sind die Einlässe 7 bevorzugt äquidistant angeordnet. Durch diese kann der Sauerstoff O₂ besonders fein verteilt in das Schwefelbad 5 eingeleitet werden, sodass eine Reaktion zwischen Schwefel S und Sauerstoff O₂ besonders effizient und vollständig ablaufen kann.

Da das gemeinsame Gehäuse, somit auch der Generator 2 und der Reaktor 8, über ein dem Reaktor 8 nachgeschaltetes Ventil 12, welches in einer zweiten Leitung 14 angeordnet ist, bei einem Druck von 20 bar betrieben werden, können Generator 2 und Reaktor 8, und damit auch das gemeinsame Gehäuse, bei gleichbleibender Produktionsmenge besonders klein dimensioniert sein. Durch Verwendung von Sauerstoff O₂ mit zumindest 99 % Reinheit, insbesondere bei einer Elektrolyse von Wasser erzeugter Sauerstoff O₂, kann dieser Effekt weiter Verstärkt und im Vergleich zu herkömmlichen Anlagen eine Verkleinerung um den Faktor 100 erreicht werden. Zudem wird eine Siedetemperatur des Schwefelbades 5 bei einem Druck von 20 bar im Vergleich zur Siedetemperatur bei Normaldruck zu höheren Temperaturen verschoben, weshalb das Prozessgas eine vergleichsweise besonders geringe Menge von Schwefeldämpfen aufweisen kann. Entsprechend kann das gemeinsame Gehäuse auch ohne Tropfenabscheider 31 ausgebildet sein und das Prozessgas direkt vom Bereich des Generators 2 in jenen des Reaktors 8 geleitet werden.

Da es sich bei der Reaktion von Sauerstoff O₂ mit Schwefel S um eine exotherme Reaktion handelt, wird die freigesetzte Energie über den Wärmeträger 27 des im Schwefelbad 5 angeordneten ersten Wärmetauschers 10 abgeführt. Dadurch kann eine Temperatur des Schwefelbades 5 und damit auch des entstehenden Prozessgases derart konstant gehalten werden, dass das Prozessgas direkt in den Bereich des Reaktors 8 übertreten kann. Hierbei weist das Prozessgas bevorzugt eine Temperatur zwischen 350 °C und 550 °C, insbesondere zwischen 400 °C und 480 °C, auf.

In der Regel wird dem entstandenen Prozessgas, welches Schwefeldioxid umfasst, über die Sauerstoffzufuhr 4 zusätzlich noch Sauerstoff O₂ beigemengt. Dabei wird der zugesetzte Sauerstoff O₂ vorzugsweise so dosiert, dass ein Lambda-Wert von 1 erhalten wird. Alternativ kann auch mehr Sauerstoff O₂ zugesetzt werden, sodass ein Lambda-Wert über 1 erhalten und etwaige im Prozessgas enthaltene Schwefeldämpfe berücksichtigt werden. Damit ist im Prozessgas genug Sauerstoff O₂ zur vollständigen Oxidation des enthaltenen Schwefeldioxids vorhanden. Das Prozessgas, welches nunmehr Schwefeldioxid und Sauerstoff O₂ umfasst, tritt durch den Tropfenabscheider 31 in den Bereich des Reaktors 8 über, wobei im Prozessgas enthaltener Schwefeldampf am Tropfenabscheider 31 kondensiert und in den Bereich des Generators 2 rückgeführt werden kann.

Im Bereich des Reaktors 8 gelangt das Prozessgas direkt in eine Reaktionszone 9, in welcher der zweite Wärmetauscher 11 und ein Katalysator angeordnet sind, und wird am Katalysator oxidiert. Dabei kommt ein Platinkatalysator zum Einsatz, mit welchem im Prozessgas enthaltenes Schwefeldioxid und gegebenenfalls enthaltene Schwefeldämpfe katalytisch oxidiert werden, sodass ein Schwefeltrioxid umfassendes oxidiertes Prozessgas erhalten wird. Durch den Druck von 20 bar innerhalb des gemeinsamen Gehäuses ist ein Reaktionsgleichgewicht der Oxidation von Schwefeldioxid und Sauerstoff zu Schwefeltrioxid zur Seite des Produktes hin verschoben. Da auch die katalytische Oxidation als exotherme Reaktion stattfindet, wird die freigesetzte Energie vom zweiten Wärmetauscher 11, insbesondere dem darin geführten Wärmeträger 27, aus der Reaktionszone 9 abgeleitet. Dadurch kann die Temperatur in der Reaktionszone 9 jederzeit unter 550 °C gehalten werden. Zudem wird vom zweiten Wärmetauscher 11 auch Wärme aus dem Prozessgas selbst abgeführt, sodass dieses am Ende der katalytischen Oxidation sogar eine niedrigere Temperatur als zu Beginn der katalytischen Oxidation aufweist, für gewöhnlich zwischen 250 °C und 420 °C, bevorzugt zwischen 250 °C und 300 °C. Durch vorstehend genannte Reaktionsbedingungen, insbesondere niedrige Temperatur und hohen Druck, können zumindest 95 %, bevorzugt 99 % bis 100 %, des im Prozessgas enthaltenen Schwefeldioxids und gegebenenfalls enthaltene Schwefeldämpfe in der Reaktionszone 9 zu Schwefeltrioxid oxidiert werden.

Nach einem Verlassen der Reaktionszone 9 wird das nunmehr oxidierte Prozessgas über die zweite Leitung 14 in einen Absorber 13 geführt. Im Zuge dessen kann das oxidierte Prozessgas über einen weiteren Wärmetauscher abgekühlt werden, wobei dieser Wärmetauscher mit einem vom Wärmeträger 27 unterschiedlichen Wärmeträger, in der gegenständlichen Ausführungsvariante Wasser, betrieben wird. Dabei wird das Wasser über einen Frischwasserzulauf H₂O (I) in einen Speicher 32 eingebracht. Vom Speicher 32 aus, wird das Wasser mittels einer nicht dargestellten Pumpe zunächst zum an der zweiten Leitung 14 angeordneten weiteren Wärmetauscher geleitet und nimmt Wärme des oxidierten Prozessgases auf, ehe dieses zur Nutzung der aufgenommenen Wärme in einen Dampfkessel 25 geleitet wird. Folglich kann das oxidierte Prozessgas über den weiteren Wärmetauscher derart gekühlt werden, dass dieses bevorzugt Temperaturen zwischen 120 °C und 200 °C, besonders bevorzugt zwischen 130 °C und 160 °C, aufweist. Um einen hohen Druck am Wasserzulauf des Dampfkessels 25 zu vermeiden, ist ein Überlauf vorgesehen, über welchen erwärmtes Wasser zurück zum Speicher 32 geleitet wird. Vorzugsweise wird dieser Überlauf über ein Überdruckventil gesteuert. Zudem kann dem Frischwasserzulauf H₂O (I) und dem Wasserzulauf des Dampfkessels 25 jeweils ein Ventil nach- bzw. vorgeschaltet sein, um eine Wassermenge entsprechend regulieren zu können.

Mit dieser Temperatur passiert das oxidierte Prozessgas das bevorzugt als Druckventil ausgebildete Ventil 12 und gelangt von einem Bereich mit 20 bar Druck in einen Bereich mit Umgebungsdruck. In diesem Bereich wird das oxidierte Prozessgas über die zweite Leitung 14 und einen Prozessgaseinlass 15 in den Absorber 13 geführt. Der Absorber 13 selbst ist aus Stahl, insbesondere aus Schwarzstahl, gefertigt und die im Inneren befindlichen Oberflächen vorzugsweise mit chemikalienresistenten Kunststoffen, zumeist Fluorpolymere wie Polytetrafluorethylen (PTFE) oder Perfluoralkoxy-Polymere (PFA), beschichtet, um Reaktionen zwischen Stahlbestandteilen und Schwefelsäure bzw. Oleum zu verhindern. Für gewöhnlich wird das oxidierte Prozessgas beim Eintritt in den Absorber 13 in ein Bad aus Schwefelsäure eingeleitet. Dabei wird ein Schwefeltrioxid-Anteil des oxidierten Prozessgases zumindest teilweise absorbiert und das restliche Prozessgas in einer ersten Absorptionsstufe 18 und einer zweiten Absorptionsstufe 19 aufgenommen. Im Bad wird die Schwefelsäure durch das aufgenommene Schwefeltrioxid zu Oleum und dieses zum Teil über einen Produktauslass 16 aus dem Absorber 13 abgelassen und in einen Desorber 20 gepumpt. Noch vor Erreichen des Desorbers 20 wird das Oleum über einen Wärmetauscher temperiert, wobei dieser Wärmetauscher mit einem Wärmeträgermedium aus einem Dampfauslass des Dampfkessels 25, insbesondere Wasserdampf H₂O (g), versorgt wird. Nach erfolgtem Wärmetausch wird dieses Wärmeträgermedium zum Speicher 32 rückgeführt.

Im Desorber 20, welcher ebenfalls aus Stahl gefertigt und auf einer Innenseite mit chemikalienbeständigen Kunststoffen ausgekleidet ist, sammelt sich das Oleum in Form eines Bades. Anschließend wird im Desorber 20 ein negativer Überdruck, bevorzugt durch eine Vakuumpumpe, erzeugt, sodass ein im Oleum absorbierter Schwefeltrioxid-Anteil in eine Gasphase übergeht und über eine am oberen Ende des Desorbers 20 angebrachte Leitung in einen ersten Kondenser 21 geführt wird. In diesem wird Schwefeltrioxid aus der Gasphase kondensiert und anschließend in einen zweiten Kondenser 22 überführt. Zum Kühlen des ersten Kondensers 21 wird ein Wärmeträgermedium verwendet, welches in einem Kühler 23 bereitgestellt und temperiert wird. Im zweiten Kondenser 22 kann verbliebenes gasförmiges Schwefeltrioxid kondensiert werden, ehe das erhaltene flüssige Schwefeltrioxid über eine Leitung in den Tank 24 geleitet.

Der Tank 24 ist analog zu Absorber 13 und Desorber 20 aus Stahl mit chemikalienbeständiger Kunststoffbeschichtung ausgebildet. In diesem wird das flüssige Schwefeltrioxid aufgefangen und mit Reinstwasser sowie einer wässrigen Lösung mit 8 Gew.-% Wasserstoffperoxid HPO umgesetzt. Die dabei erzeugte Schwefelsäure in Elektronikqualität wird in einem Kreislauf geführt, welcher über einen Wärmetauscher gekühlt wird. Aus diesem Kreislauf wird die Schwefelsäure in Elektronikqualität als Produkt P abgeführt.

Des Weiteren kann ein Teil des aus dem Produktauslass 16 kommenden Oleums über einen Wärmetauscher gekühlt und auf die erste Absorptionsstufe 18 gesprüht und/oder geleitet werden. Dadurch kann von der ersten Absorptionsstufe 18 absorbiertes Schwefeltrioxid ausgewaschen und dem Bad aus Schwefelsäure zugeführt werden. Zum gleichen Zweck ist auch an einem unteren Ende des Desorbers 20 ein Auslass vorgesehen, über welchen eine durch Verringern des Schwefeltrioxid-Anteiles des Oleums erhaltene Schwefelsäure zurück zum Absorber 13 geleitet wird. Diese Schwefelsäure kann über einen Wärmetauscher gekühlt und auf die zweite Absorptionsstufe 19 gesprüht und/oder geleitet werden. Hierdurch können nach der ersten Absorptionsstufe 18 im oxidierten Prozessgas verbliebene Schwefeltrioxid-Anteile in der zweiten Absorptionsstufe 19 absorbiert und von der Schwefelsäure ausgewaschen werden. Konkret können sich beide vorstehend genannten Wärmetauscher mit dem Wärmetauscher des zweiten Kondensers 22 ein Wärmeträgermedium teilen und ein eigens temperierbarer Kreislauf gebildet werden.

Das weitestgehend, insbesondere vollkommen, vom Schwefeltrioxid befreite oxidierte Prozessgas verlässt den Absorber 13 als Abgas über den Abgasauslass 17. Das Abgas umfasst in der Regel Schwefeldioxid und Sauerstoff O₂ und wird mit einem Abgas aus dem ersten Kondenser 21 zusammengeführt, ehe die gesammelten Abgase einer Abgasnachbehandlung A zugeführt und aus dem Prozess ausgekoppelt werden.

Der Wärmeträger 27, welcher im ersten Wärmetauscher 10 und im zweiten Wärmetauscher 11 geführt wird, wird für gewöhnlich in einem Reservoir 26 gesammelt. Dabei bildet dieser ein Bad, dessen Temperatur von einem Wärmetauscher oder einer elektrischen Heizung reguliert werden kann. Das Reservoir 26 ist zudem mit einem Auslass ausgestattet, über welchen der Wärmeträger 27 in einem ersten Kreislauf 28 zu den Wärmetauschern 10, 11 in die Bereiche des Generators 2 und des Reaktors 8 in das gemeinsame Gehäuse geführt wird. Um eine Flussgeschwindigkeit im Kreislauf 28 zu steuern und den Wärmeträger 27 aus dem Reservoir 26 zu fördern, ist eine Pumpe vorgesehen, welche in Fig. 1 nicht gezeigt ist.

Nachdem der Wärmeträger 27 die Wärmetauscher 10, 11 verlassen hat, sich also im Rücklauf befindet, wird dieser zusammengeführt und in den Dampfkessel 25 geleitet. Dabei wird die vom Wärmeträger 27 aufgenommene Wärme genutzt, um das bereits durch den Wärmetauscher an der zweiten Leitung 14 vorgeheizte Wasser zu verdampfen und Wasserdampf H₂O (g) zu erzeugen. Letzterer wird zum einen aus dem Verfahren geschleust, wobei dieser zuvor noch durch Wärmetausch mit dem Rücklauf des Kreislaufes 28 weiter erhitzt wird, und zum anderen im Wärmetauscher zum Temperieren des Oleums genutzt. Im Dampfkessel 25 wird der Wärmeträger 27 gekühlt und über einen Einlass wieder zurück in das Reservoir 26 geleitet. In dieser Ausbildungsvariante handelt es sich beim Wärmeträger 27 um eine Salzschmelze, insbesondere aus Alkalinitraten und Alkalinitriten.

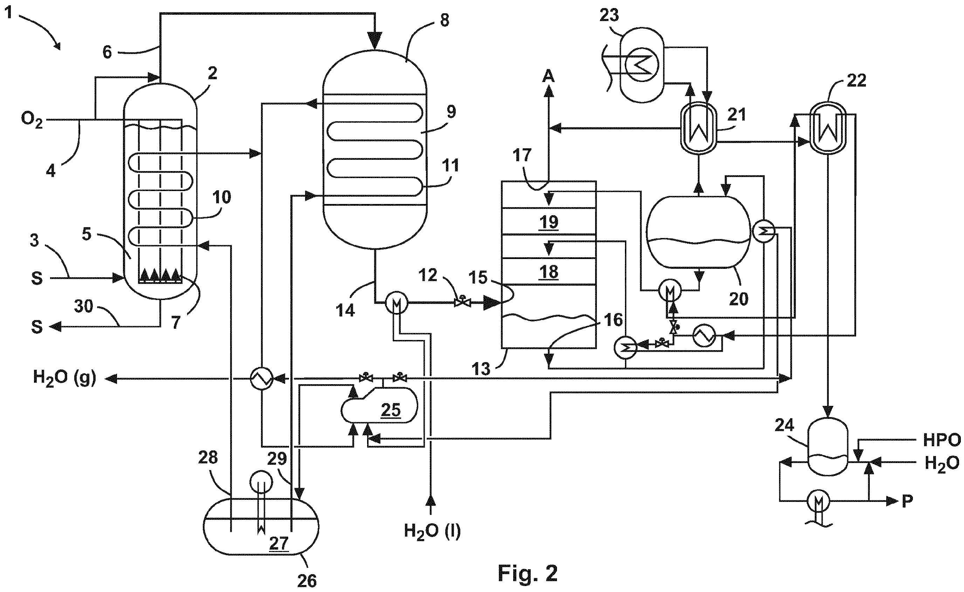

In der Fig. 2 ist ein Fließschema einer zweiten Ausführungsvariante des Verfahrens und einer hierzu ausgebildeten Vorrichtung 1 gezeigt. Da dieses in großen Teilen ident zur ersten Ausführungsvariante ist, wird nachfolgend lediglich auf sich unterscheidende Merkmale der zweiten Ausführungsvariante eingegangen. Insbesondere im Bereich niedrigen Drucks ist die zweite Ausführungsvariante analog zur Vorrichtung 1 der ersten Ausführungsvariante ausgebildet. Im Bereich hohen Drucks geht aus dem Fließschema eindeutig hervor, dass der Generator 2 und der Reaktor 8 nicht in einem gemeinsamen Gehäuse zusammengefasst, sondern durch eine erste Leitung 6 miteinander verbunden sind. Zwar erfolgt ein Betrieb des Generators 2 und des Reaktors 8 analog zur ersten Ausführungsvariante, jedoch weisen diese jeweils ein eigenes Gehäuse aus Stahl auf. Entsprechend entfällt in dieser Ausführungsvariante der Tropfenabscheider 31.

Zudem ist die Sauerstoffzufuhr 4 so ausgestaltet, dass diese analog zur ersten Ausführungsvariante Sauerstoff O₂ in das Schwefelbad 5 einleitet und noch vor dem Generator 2 in zwei Sauerstoffzufuhren 4 getrennt wird, jedoch wird die zweite Sauerstoffzufuhr 4 in die erste Leitung 6 geleitet, um dem Prozessgas noch vor Eintritt in den Reaktor 8 Sauerstoff O₂ beimengen zu können.

Darüber hinaus ist in dieser Ausführungsvariante kein Speicher 32 am Frischwasserzulauf H₂O (I) vorgesehen, sodass das Wasser direkt über den weiteren Wärmetauscher an der zweiten Leitung 14 erhitzt und anschließend zum Dampfkessel 25 geleitet werden kann. Hierbei wird der im Dampfkessel 25 erzeugte Wasserdampf H₂O (g) zwar analog zur ersten Ausführungsvariante zu jenem Wärmetauscher geleitet, welcher zum Temperieren des Oleums genutzt wird, jedoch nach Abgabe der Wärme zum Wasserzulauf des Dampfkessels 25 zurückgeführt. Alternativ kann auch der Aufbau der ersten Ausführungsvariante mit Speicher 32 und entsprechender Führung des Wasserdampfes H₂O (g) vorgesehen sein. Dem Dampfkessel 25 können auch entsprechende Ventile nachgeschaltet sein, um den Wasserdampf H₂O (g) aus dem Prozess zu schleusen.

Im Unterschied zur ersten Ausführungsvariante ist auch vorgesehen, dass der Wärmeträger 27 in zwei Kreisläufen 28, 29 über jeweils eine nicht dargestellte Pumpe aus dem Reservoir 26 gefördert wird. Auf diese Weise kann eine Flussgeschwindigkeit des Wärmeträgers 27 für den ersten Wärmetauscher 10 des Generators 2 und den zweiten Wärmetauscher 11 des Reaktors 8 unabhängig voneinander eingestellt und angepasst werden. Nachdem der Wärmeträger 27 die Wärmetauscher 10, 11 verlassen hat, sich also im Rücklauf befindet, werden die beiden Kreisläufe 28, 29 zusammengeführt und in den Dampfkessel 25 geleitet, wobei diese den aus dem Prozess zu schleusenden Wasserdampf H₂O (g) über einen Wärmetauscher weiter erhitzen können.

Mit einem solchen Verfahren lässt sich ein Prozessgas bei erhöhtem Druck durch Einleiten von Sauerstoff O₂ in ein Schwefelbad 5 bei einer solchen Temperatur erzeugen, dass dieses ohne weitere Kühlung in einer Reaktionszone 9 bei erhöhtem Druck katalytisch oxidiert und das erhaltene oxidierte Prozessgas bei Umgebungsdruck verarbeitet werden kann.

## Patentansprüche

1. Verfahren zur Herstellung von Schwefeltrioxid und optional Schwefelsäure, insbesondere Schwefelsäure in Elektronikqualität, wobei Sauerstoff (O₂) über mehrere Einlässe (7) in ein im Wesentlichen aus flüssigem Schwefel (S) bestehendes Schwefelbad (5) eingeleitet und mit dem Schwefel (S) zur Reaktion gebracht wird, wobei ein Schwefeldioxid umfassendes Prozessgas erzeugt wird, wonach das im Prozessgas enthaltene Schwefeldioxid katalytisch zu Schwefeltrioxid oxidiert wird, **dadurch gekennzeichnet, dass** das Prozessgas in einem Bereich hohen Drucks und unter Temperierung des Schwefelbades (5), wobei eine Wärmeübertragung mit einem innerhalb des Schwefelbades (5) geführten Wärmeträger (27) erfolgt, mit einer für die nachfolgende katalytische Oxidation ausgelegten Temperatur erzeugt wird, wonach das Prozessgas im Bereich hohen Drucks katalytisch oxidiert wird, ehe ein Schwefeltrioxid umfassendes oxidiertes Prozessgas in einen Bereich niedrigen Drucks überführt wird.

2. Verfahren nach Anspruch 1, **dadurch gekennzeichnet, dass** im Bereich hohen Drucks ein Druck von 2 bar bis 25 bar, bevorzugt 4 bar bis 20 bar, und/oder im Bereich niedrigen Drucks ein Druck kleiner 2 bar, bevorzugt Umgebungsdruck, angelegt wird.

3. Verfahren nach Anspruch 1 oder 2, **dadurch gekennzeichnet, dass** der Sauerstoff (O₂) entlang eines Führungsmittels durch das Schwefelbad (5) geleitet und dadurch vorgeheizt wird.

4. Verfahren nach einem der Ansprüche 1 bis 3, **dadurch gekennzeichnet, dass** das Prozessgas mit Temperaturen zwischen 350 °C und 550 °C, insbesondere zwischen 400 °C und 480 °C, erzeugt wird.

5. Verfahren nach einem der Ansprüche 1 bis 4, **dadurch gekennzeichnet, dass** das Prozessgas während der katalytischen Oxidation durch Wärmeübertragung auf den Wärmeträger (27) gekühlt wird.

6. Verfahren nach Anspruch 5, **dadurch gekennzeichnet, dass** der Wärmeträger (27) in zumindest zwei Kreisläufen (28, 29) für das Schwefelbad (5) und die katalytische Oxidation geführt wird.

7. Verfahren nach einem der Ansprüche 1 bis 6, **dadurch gekennzeichnet, dass** das Schwefeltrioxid des oxidierten Prozessgases im Bereich niedrigen Drucks in Schwefelsäure absorbiert wird.

8. Vorrichtung (1) zur Herstellung von Schwefeltrioxid und optional Schwefelsäure, insbesondere Schwefelsäure in Elektronikqualität, insbesondere nach einem Verfahren der Ansprüche 1 bis 7, umfassend einen Generator (2) mit einer Schwefelzufuhr (3) und einer Sauerstoffzufuhr (4) mit mehreren Einlässen (7), in welchem Generator (2) Sauerstoff (O₂) zum Erzeugen eines Prozessgases über die Einlässe (7) in ein im Wesentlichen aus flüssigem Schwefel (S) bestehendes Schwefelbad (5) einleitbar ist, und einen Reaktor (8) mit einer Reaktionszone (9) zur Oxidation von Schwefeldioxid zu Schwefeltrioxid, wobei in der Reaktionszone (9) ein Katalysator für die Oxidation angeordnet ist, und wobei Generator (2) und Reaktor (8) integral ausgebildet oder über eine erste Leitung (6) miteinander verbunden sind, **dadurch gekennzeichnet, dass** im Generator (2) innerhalb des Schwefelbades (5) ein erster Wärmetauscher (10) positioniert ist, durch welchen eine Reaktionswärme abführbar ist, und dem Reaktor (8) ein Ventil (12) nachgeschaltet ist, über welches ein Druck im Generator (2) und Reaktor (8) regelbar ist.

9. Vorrichtung (1) nach Anspruch 8, **dadurch gekennzeichnet, dass** ein Absorber (13) zum Absorbieren des Schwefeltrioxids in Schwefelsäure vorgesehen ist, welcher einen Prozessgaseinlass (15), einen Produktauslass (16) und einen Abgasauslass (17) aufweist und über eine zweite Leitung (14) mit dem Reaktor (8) verbunden ist.

10. Vorrichtung (1) nach Anspruch 9, **dadurch gekennzeichnet, dass** das Ventil (12) als Regelventil, insbesondere als Druckventil, ausgebildet und mit der zweiten Leitung (14) verbunden ist.

11. Vorrichtung (1) nach einem der Ansprüche 8 bis 10, **dadurch gekennzeichnet, dass** in der Reaktionszone (9) ein zweiter Wärmetauscher (11) vorgesehen ist, um Wärme aus der Reaktionszone (9) abzuführen.

12. Vorrichtung (1) nach Anspruch 11, **dadurch gekennzeichnet, dass** ein Reservoir (26) zur Versorgung der Wärmetauscher (10, 11) mit einem Wärmeträger (27) vorgesehen ist.

13. Vorrichtung (1) nach Anspruch 11 oder 12, **dadurch gekennzeichnet, dass** für den ersten Wärmetauscher (10) im Generator (2) und den zweiten Wärmetauscher (11) im Reaktor (8) jeweils ein Kreislaufvorgesehen ist.

14. Vorrichtung (1) nach Anspruch 12, **dadurch gekennzeichnet, dass** als Wärmeträger (27) eine Salzschmelze, bevorzugt aus Alkalinitraten und/oder -nitriten, vorgesehen ist.

15. Verwendung einer Vorrichtung (1) nach einem der Ansprüche 8 bis 14 zur Herstellung von Schwefeltrioxid und optional Schwefelsäure, insbesondere Schwefelsäure in Elektronikqualität.
